# EUROPEAN PATENT APPLICATION

(11) **EP 4 674 525 A1**
(43) Date of publication of application: **07.01.2026**
(21) Application number: 24763405.8
(22) Date of filing: 11.01.2024
(51) Int. Cl.: B01J 19/24, B01J 8/06, B01J 19/00, C07B 61/00, C07C 1/04, C07C 1/22, C07C 9/04

(54) **REACTOR**

(30) Priority: 28.02.2023 JP 2023029544
(71) Applicant: Niterra Co., Ltd., Nagoya-shi, Aichi 461-0005 (JP)
(72) Inventor: MIZUNO, Akihito, Nagoya-shi, Aichi 461-0005 (JP); YABUHANA, Masaki, Nagoya-shi, Aichi 461-0005 (JP); IWASA, Syoto, Nagoya-shi, Aichi 461-0005 (JP); NAKAMURA, Yosuke, Nagoya-shi, Aichi 461-0005 (JP)
(74) Representative: Grünecker Patent- und Rechtsanwälte PartG mbB
(86) International application number: PCT/JP2024/000426
(87) International publication number: WO 2024/180920

(57) **Abstract**

A reactor which can reduce the amount of heat discarded to the outside of the system is provided. A reactor (10) includes a reaction vessel (20) in which a source gas flows from an inlet (21) toward an outlet (22), and a catalyst (23) disposed in the reaction vessel. The reactor obtains a product gas by a chemical reaction involving heat generation. The reactor includes a refrigerant channel (27) which is provided on the outer side of the reaction vessel and through which the source gas flows, as a refrigerant, before flowing through the reaction vessel.

## Description

### TECHNICAL FIELD

The present invention relates to a reactor which obtains a product gas by a chemical reaction involving heat generation.

### BACKGROUND ART

Patent Document 1 discloses a prior art technique relating to a reactor in which a source gas is caused to flow through a reaction vessel including a catalyst, and thus a product gas is obtained by a chemical reaction involving heat generation. According to the prior art technique, a fin or piping for cooling water is provided for the reaction vessel so as to cool a portion of the reaction vessel.

### PRIOR ART DOCUMENT

### PATENT DOCUMENT

Patent Document 1: JP2000-243425A

### SUMMARY OF THE INVENTION

### PROBLEM TO BE SOLVED BY THE INVENTION

The prior art technique has a problem that the heat of the reaction vessel removed by the cooling water or the fin is discarded to the outside of the system of the reactor.

The present invention has been accomplished in order to solve this problem, and an object of the present invention is to provide a reactor which can reduce the amount of heat discarded to the outside of the system.

### MEANS FOR SOLVING THE PROBLEM

A first mode of the present invention which achieves this object is a reactor comprising a reaction vessel in which a source gas flows from an inlet toward an outlet; and a catalyst disposed in the reaction vessel, the reactor obtaining a product gas by a chemical reaction involving heat generation, wherein the reactor comprises a refrigerant channel which is provided on an outer side of the reaction vessel and through which the source gas flows, as a refrigerant, before flowing through the reaction vessel.

A second mode is the reactor of the first mode in which the refrigerant channel is provided at a position corresponding to a highest temperature region of a temperature distribution of the catalyst in a flow direction of the source gas, the temperature distribution being caused by heat produced as a result of the chemical reaction before the catalyst deteriorates.

A third mode is the reactor of the first or second mode which comprises a peripheral pipe which covers an outer circumference of the reaction vessel, and the refrigerant channel is a space between the reaction vessel and the peripheral pipe.

A fourth mode is the reactor of any of the first to third modes which further comprises a heater provided at a portion of the reaction vessel closer to the outlet than the position corresponding to the highest temperature region of the temperature distribution of the catalyst.

A fifth mode is the reactor of the fourth mode in which the refrigerant channel is disposed on the inlet side in relation to the heater, and the refrigerant flows in a direction opposite a flow direction of the source gas within the reaction vessel.

A sixth mode is the reactor of any of the first to fifth modes which further comprises a heat exchanger for heating the source gas by the product gas.

A seventh mode is the reactor of any of the first to sixth modes in which the source gas includes hydrogen and at least one of carbon dioxide and carbon monoxide, and the chemical reaction is a reaction for synthesizing methane from the source gas.

### EFFECTS OF THE INVENTION

According to the reactor of the present invention, the source gas flows, as a refrigerant, through the refrigerant channel disposed on the outer side of the reaction vessel before flowing through the reaction vessel. Since the source gas having taken heat from the reaction vessel enters the reaction vessel so that an exothermic reaction occurs, it is possible to reduce the amount of heat taken from the reaction vessel and discarded to the outside of the system.

### BRIEF DESCRIPTION OF THE DRAWING

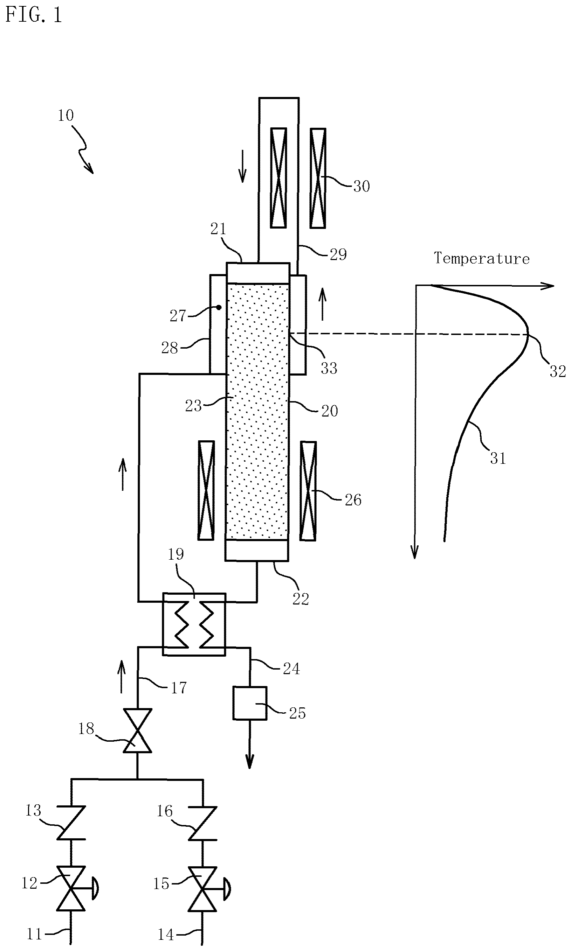

[FIG. 1] FIG. 1 is a block diagram of a reactor according to one embodiment.

### MODE FOR CARRYING OUT THE INVENTION

A preferred embodiment of the present invention will now be described with reference to the attached drawing. FIG. 1 is a block diagram of a reactor 10 according to one embodiment. The reactor 10 includes a reaction vessel 20 through which a source gas flows and which obtains a product gas by an exothermic reaction.

Two piping lines 11 and 14 are connected to the reaction vessel 20. The piping line 11 is a piping line to which a first source gas is supplied, and a control valve 12 and a check valve 13 are disposed in the piping line 11 in this order from the upstream side toward the downstream side. The piping line 14 is a piping line to which a second source gas is supplied, and a control valve 15 and a check valve 16 are disposed in the piping line 14 in this order from the upstream side toward the downstream side. A gate valve 18 is disposed in a first source gas pipe 17 into which the piping lines 11 and 14 merge. The first and second source gases pass through the respective control valves 12 and 15, whereby the first and second source gases are mixed together at an optimum mixing ratio. A gas mixture (source gas) produced as a result of mixing of the two source gases flows through the first source gas pipe 17 via the gate valve 18.

A heat exchanger 19 is connected to the downstream side of the gate valve 18 disposed in the first source gas pipe 17. The heat exchanger 19 performs heat exchange between the source gas which flows through the first source gas pipe 17 and is low in temperature and a product gas which flows through a product gas pipe 24 (which will be described later) and is high in temperature. Although no limitation is imposed on the heat exchanger 19, a plate-type heat exchanger is preferred because of its high heat transfer coefficient. In the plate-type heat exchanger, the source gas and the product gas are caused to alternately flow through spaces between stacked heat transfer plates, thereby performing heat exchange therebetween.

An upstream end of the product gas pipe 24 is connected to an outlet 22 of the reaction vessel 20. A downstream end of a second source gas pipe 29 connected to a downstream of the first source gas pipe 17 is connected to an inlet 21 of the reaction vessel 20. A catalyst 23 is disposed in the reaction vessel 20. The catalyst 23 lowers the activation energy of a chemical reaction of the source gas flowing into the reaction vessel 20 through the inlet 21, thereby facilitating the progress of the chemical reaction. The product gas containing a chemical reaction product flows into the product gas pipe 24 through the outlet 22 of the reaction vessel 20.

Any of catalysts suitable for various chemical reactions is used as the catalyst 23 without limitation. Examples of the catalyst 23 include a catalyst in a powdery form, a catalyst in the form of pellets, and a catalyst in the form of a porous structure, in each of which particles are carried by a carrier. Examples of the carrier include powder, pellets, and a porous structure formed of one or more oxides selected from alumina, silica, magnesia, titania, zirconia, niobia, silica·alumina, zeolite, and calcium phosphate. The porous structure has gas permeability and therefore allows passage of the source gas therethrough. Also, the source gas passes through the gaps between the pellets or the powder. Examples of the material of the particles carried by the carrier include one or more metals selected from Fe, Co, Ni, Cu, Ru, Rh, Pd, Ag, Ir, Pt, and Au.

No limitation is imposed on the distribution of catalytic activity in the reaction vessel 20. For example, the catalyst 23 may be disposed in such a manner that the catalytic activity becomes approximately uniform over the entire length in a direction in which the gas flows, or the catalyst 23 may be disposed in such a manner that the catalytic activity on the upstream side becomes lower than the catalytic activity on the downstream side. If the carrier and the material and particle size of the particles are the same, the catalytic activity is proportional to the surface area of the particles carried by the carrier. Therefore, the catalytic activity can be lowered by reducing the surface area of the particles carried by the carrier. The catalytic activity can be also lowered by mixing inactive particles having no catalytic activity into the catalyst 23 and reducing the amount of the catalyst 23 contained in a certain amount of the mixture. Examples of the inactive particles include pellets and powder formed of one or more oxides selected from alumina, silica, magnesia, titania, zirconia, niobia, silica·alumina, zeolite, and calcium phosphate.

In the present embodiment, the case where the first source gas is hydrogen, and the second source gas is at least one of carbon dioxide and carbon monoxide will be described. The reaction vessel 20 has an internal pressure properly set and performs methane production (methanation) represented by a chemical equation CO₂ + 4H₂ → CH₄ + 2H₂O or CO + 3H₂ → CH₄ + H₂O. The product gas is cooled by a condenser 25 connected to the product gas pipe 24, whereby water and a gas containing methane are separated from the product gas. The gas containing methane may contain a portion of the source gas.

Methanation is one example of the chemical reaction occurring in the reaction vessel 20, and the chemical reaction is not limited thereto. For example, the following chemical reactions can be caused to occur in the reaction vessel 20 by approximately selecting the type of the source gas, the type of the catalyst 23, and reaction conditions.

Synthesis gas production by partial oxidation of methane: 2CH₄ + O₂ → 2CO + 4H₂
Methanol synthesis: CO + 2H₂ → CH₃OH
Methanol synthesis: CO₂ + 3H₂ → CH₃OH + H₂O
Fischer-Tropsch synthesis: CO + 2H₂ → -(CH₂)- + H₂O (-(CH₂)- represents a linear-chain hydrocarbon)
Dimethyl ether synthesis: 2CO + 4H₂ → CH₃OCH₃ + H₂O
Ammonia synthesis: N₂ + 3H₂ → 2NH₃

A heater 26 is disposed near the outlet 22 of the reaction vessel 20. The heater 26 heats the catalyst 23, the source gas, and the product gas within the reaction vessel 20. It is not necessary to provide the heater 26 over the entire circumference of the reaction vessel 20. In the case where a cavity is present inside the reaction vessel 20 as in a cylindrical tubular reaction vessel 20, it is possible to dispose the heater 26 in the cavity. Examples of the heater 26 include a heater which heats the catalyst 23 by heating a heat source by electricity or combustion heat of a gas and a heater which utilizes induction heating. In particular, the heater 26 which heats the catalyst 23 by heating the heat source by electricity is preferred because the accuracy of temperature control is high.

A refrigerant channel 27 is disposed on the outer side of the reaction vessel 20. A refrigerant flowing through the refrigerant channel 27 performs heat exchange with the reaction vessel 20. The refrigerant is the source gas before flowing through the reaction vessel 20. The refrigerant channel 27 of the present embodiment is a space provided between the reaction vessel 20 and a tubular peripheral pipe 28 which covers the outer circumference of a portion of the reaction vessel 20 near the inlet 21. By virtue of this, the structure of the refrigerant channel 27 can be simplified.

A downstream end of the first source gas pipe 17 is connected to the refrigerant channel 27 at a position near the outlet 22 of the reaction vessel 20, and an upstream end of the second source gas pipe 29 is connected to the refrigerant channel 27 at a position near the inlet 21 of the reaction vessel 20. The source gas having entered the refrigerant channel 27 from the first source gas pipe 17 flows, along the reaction vessel 20, within the refrigerant channel 27 located outside the reaction vessel 20, from the outlet 22 side of the reaction vessel 20 toward the inlet 21 side of the reaction vessel 20, and then enters the second source gas pipe 29. Since the source gas having entered the reaction vessel 20 from the downstream end of the second source gas pipe 29 flows from the inlet 21 of the reaction vessel 20 toward the outlet 22 of the reaction vessel 20, the source gas within the refrigerant channel 27 flows in a direction opposite the flow direction of the source gas within the reaction vessel 20.

A heater 30 for heating the source gas flowing through the second source gas pipe 29 is provided for the second source gas pipe 29. Examples of the heater 30 include a heater which heats the source gas pipe 29 by heating a heat source by electricity or combustion heat of a gas, a heater which utilizes induction heating, and a heater which utilizes exhaust heat of the reaction vessel 20. In particular, the heater 30 which heats the source gas pipe 29 by heating the heat source by electricity is preferred because the accuracy of temperature control is high.

When the source gas enters the reaction vessel 20 from the inlet 21, a chemical reaction proceeds while the source gas passes through the catalyst 23, and the product gas flows out from the outlet 22 of the reaction vessel 20. Since the chemical reaction occurring in the reaction vessel 20 involves heat generation, the catalyst 23 is heated by reaction heat.

A graph shown in FIG. 1 shows a temperature distribution 31 of the catalyst 23, in which the vertical axis represents the distance from an end of the catalyst 23 near the inlet 21, and the horizontal axis represents the temperature of the catalyst 23 heated by reaction heat. The temperature distribution 31 is equal to a temperature distribution obtained, when the catalyst 23 is used for the first time, by disposing the catalyst 23 such that the catalytic activity becomes approximately uniform in the flow direction of the source gas, disposing a plurality of thermocouples at the centroid of a cross section of a reaction field (aggregate of the catalysts 23) such that the thermocouples are arranged along the direction in which the source gas flows, and recording the temperatures detected by the thermocouples when chemical equilibrium is established after elapse of a predetermined time from a reaction start time.

In the case of a chemical reaction (for example, methanation) involving generation of a large amount of heat, the chemical reaction starts very quickly in the vicinity of the inlet 21 where the source gas having entered the reaction vessel 20 from the inlet 21 meets the catalyst 23. As a result of start of this reaction, the catalyst 23 is heated, and a region 32 (hereinafter referred to as the "hot spot") where the temperature is the highest is generated in the vicinity of the inlet 21. Since a reaction product moves downward with the flow of the source gas, a large amount of the reaction product is present in the vicinity of the outlet 22, and thus, the amount of the reaction heat in the vicinity of the outlet 22 does not increase so much.

As a result of operation of the reactor 10, the performance of the catalyst 23 gradually lowers; i.e., deterioration of the catalyst 23 occurs. Deterioration of the catalyst 23 such as sintering is likely to occur at or near the hot spot 32 where the catalyst 23 is exposed to high temperature. In the present embodiment, the refrigerant channel 27 is disposed at a position 33 corresponding to the hot spot 32 of the temperature distribution 31 of the catalyst 23 before deteriorating. Therefore, the temperature which the catalyst 23 reaches can be lowered by the heat exchange between the refrigerant (the source gas) flowing through the refrigerant channel 27 and the catalyst 23, the source gas, the product gas within the reaction vessel 20. Accordingly, deterioration of the catalyst 23 can be suppressed.

The refrigerant (the source gas) heated by the heat exchange with the catalyst 23 and the gases within the reaction vessel 20 enters the reaction vessel 20 through the second source gas pipe 29 and causes a chemical reaction within the reaction vessel 20. Since the heat of the reaction vessel 20 taken by the refrigerant is not discarded to the outside of the system of the reactor 10, the amount of heat discarded to the outside of the system can be reduced.

Since the reaction occurring in the reaction vessel 20 is an exothermic reaction, when the chemical reaction starts in the vicinity of the inlet 21 of the reaction vessel 20, the chemical reaction proceeds spontaneously. For start of the chemical reaction in the vicinity of the inlet 21, it is advantageous for the source gas entering the reaction vessel 20 to have a high temperature, preferably, a temperature in the range of, for example, 300°C to 350°C. Since the refrigerant (the source gas) flowing through the refrigerant channel 27 is heated by the heat exchange with the catalyst 23 and the gases within the reaction vessel 20, the reaction efficiency can be improved.

Since the source gas within the refrigerant channel 27 flows in the direction opposite the flow direction of the source gas within the reaction vessel 20, the logarithmic mean temperature difference between the source gas within the reaction vessel 20 and the refrigerant can be increased as compared with the case where the source gas within the reaction vessel 20 and the refrigerant flow in the same direction. Accordingly, it is possible to increase the amount of heat exchanged between the source gas and the refrigerant.

Since the temperature of the source gas flowing through the first source gas pipe 17 is lower than the temperature of the product gas flowing through the product gas pipe 24, in the heat exchanger 19, the source gas is heated by the product gas. Since the source gas is heated as a result of the heat exchange in the heat exchanger 19 with the product gas as well as the heat exchange in the refrigerant channel 27 with the catalyst 23 and the gases, the temperature of the source gas entering the reaction vessel 20 can be further increased. Accordingly, the reaction efficiency can be further improved.

The product gas flowing out from the reaction vessel 20 is cooled by the source gas in the heat exchanger 19. Since the condenser 25 is disposed on the downstream side of the heat exchanger 19 in the flow direction of the product gas, it is possible to reduce the amount of energy inputted to the condenser 25 so as to cool the product gas.

The flow direction of the source gas within the heat exchanger 19 is preferably opposite the flow direction of the product gas within the heat exchanger 19, because it is possible to increase the logarithmic mean temperature difference between the source gas and the product gas within the heat exchanger 19 as compared with the case where the source gas and the product gas within the heat exchanger 19 flow in the same direction. Thus, it is possible to increase the amount of heat exchange in the heat exchanger 19.

Since the heater 30 is provided for the second source gas pipe 29, when the heater 30 is activated, the temperature of the source gas entering the reaction vessel 20 from the second source gas pipe 29 can be further increased. As a result, the reaction efficiency can be further improved.

The heater 26 is disposed at a portion which is closer to the outlet 22 of the reaction vessel 20 than the position 33 corresponding to the hot spot 32 of the temperature distribution 31 of the catalyst 23; namely, the heater 26 is disposed in a portion (downstream portion) downstream of an intermediate position (in the longitudinal direction) of the entire region where the catalyst 23 is disposed. The heater 26 heats the catalyst 23 in the downstream portion, thereby securing the reaction speed in the downstream portion where a large amount of the reaction product is present. The heater 26 heats the catalyst 23 in such a manner that, irrespective of the influence of deterioration of the catalyst 23, etc., the temperature of the product gas entering the product gas pipe 24 from the outlet 22 falls within a predetermined range (for example, ±10°C). The quality of the product gas can be stabilized by temperature control of the catalyst 23 in the downstream portion by the heater 26.

The present invention has been described on the basis of an embodiment. However, it is easily inferred that the present invention is not limited to the above-described embodiment and various improvements and modifications can be made without departing from the spirit of the invention.

In the embodiment, there has been described the case where the refrigerant channel 27 is provided between the reaction vessel 20 and the peripheral pipe 28. However, the structure of the refrigerant channel 27 is not necessarily limited thereto. Of course, it is possible to provide a refrigerant channel having a different structure. The refrigerant channel having a different structure is, for example, is configured such that a pipe including the refrigerant channel therein is disposed in contact with the reaction vessel 20. The pipe may be spirally or meanderingly disposed on the reaction vessel 20 so as to increase the area of heat transfer. The pipe is preferably disposed in such a manner that the flow of the refrigerant (the source gas) flowing through the pipe becomes counterflow (including crossflow) with respect to the flow of the source gas within the reaction vessel 20. This is because the amount of heat exchange between the source gas and the refrigerant can be increased as compared to the case where the refrigerant (the source gas) flowing through the pipe flows in the same direction as the source gas within the reaction vessel 20 (the case of parallel flow).

In the embodiment, there has been described the case where the refrigerant channel 27 is provided at the position 33 corresponding to the hot spot 32 of the catalyst 23 before deteriorating. However, the position of the refrigerant channel 27 is not necessarily limited thereto. Of course, it is possible to provide the refrigerant channel 27 not to include the position 33; for example, provide the refrigerant channel 27 at a portion closer to the outlet 22 than the position 33. In this case as well, it is possible to prevent the heat of the reaction vessel 20 removed by the refrigerant (the source gas) from being discarded to the outside of the system of the reactor 10.

In the embodiment, there has been described the case where the heat exchanger 19 is disposed in the first source gas pipe 17 and the heater 30 is disposed in the second source gas pipe 29. However, the configuration of the reactor 10 is not necessarily limited thereto. Of course, it is possible to omit the heat exchanger 19 and the heater 30.

In the embodiment, there has been described the case where the heat exchanger 19 and the refrigerant channel 27 are set in such a manner that a high temperature fluid and a low temperature fluid flow in opposite directions (counterflow). The setting of the heat exchanger 19 and the refrigerant channel 27 is not necessarily limited thereto. Of course, it is possible to set the heat exchanger 19 and the refrigerant channel 27 in such a manner that the high temperature fluid and the low temperature fluid flow in the same direction.

### DESCRIPTION OF REFERENCE NUMERALS

10 reactor
19 heat exchanger
20 reaction vessel
21 inlet
22 outlet
23 catalyst
26 heater
27 refrigerant channel
28 peripheral pipe
31 temperature distribution of catalyst
32 highest temperature region
33 position corresponding to region where temperature is the highest

## Claims

1. A reactor comprising:
a reaction vessel in which a source gas flows from an inlet toward an outlet; and
a catalyst disposed in the reaction vessel,
the reactor obtaining a product gas by a chemical reaction involving heat generation,
wherein the reactor comprises a refrigerant channel which is provided on an outer side of the reaction vessel and through which the source gas flows, as a refrigerant, before flowing through the reaction vessel.

2. The reactor according to claim 1, wherein the refrigerant channel is provided at a position corresponding to a highest temperature region of a temperature distribution of the catalyst in a flow direction of the source gas, the temperature distribution being caused by heat produced as a result of the chemical reaction before the catalyst deteriorates.

3. The reactor according to claim 1, comprising a peripheral pipe which covers an outer circumference of the reaction vessel, and the refrigerant channel is a space between the reaction vessel and the peripheral pipe.

4. The reactor according to claim 1, further comprising a heater provided at a portion of the reaction vessel closer to the outlet than a position corresponding to a highest temperature region of a temperature distribution of the catalyst in a flow direction of the source gas, the temperature distribution being caused by heat produced as a result of the chemical reaction before the catalyst deteriorates.

5. The reactor according to claim 4, wherein the refrigerant channel is disposed on the inlet side in relation to the heater, and the refrigerant flows in a direction opposite a flow direction of the source gas within the reaction vessel.

6. The reactor according to claim 1, further comprising a heat exchanger for heating the source gas by the product gas.

7. The reactor according to any one of claims 1 to 6,
wherein the source gas includes hydrogen and at least one of carbon dioxide and carbon monoxide, and the chemical reaction is a reaction for synthesizing methane from the source gas.
